# EUROPEAN PATENT APPLICATION

(11) **EP 4 614 080 A1**
(43) Date of publication of application: **10.09.2025**
(21) Application number: 23884390.8
(22) Date of filing: 21.08.2023
(51) Int. Cl.: F24F 3/147, F24F 3/14, F24F 8/108, F24F 7/007

(54) **AIR TREATMENT APPARATUS**

(30) Priority: 31.10.2022 CN 202211352344; 31.10.2022 CN 202211351591
(71) Applicant: GD Midea Heating & Ventilating Equipment Co., Ltd., Foshan, Guangdong 528311 (CN); Midea Group Co., Ltd., Foshan, Guangdong 528311 (CN)
(72) Inventor: LI, Yuefei, Foshan, Guangdong 528311 (CN); MA, Lihua, Foshan, Guangdong 528311 (CN); YU, Dongdong, Foshan, Guangdong 528311 (CN); YANG, Feng, Foshan, Guangdong 528311 (CN); JIANG, Yu, Foshan, Guangdong 528311 (CN); WU, Xuannan, Foshan, Guangdong 528311 (CN); WANG, Qingwei, Foshan, Guangdong 528311 (CN)
(74) Representative: Ran, Handong
(86) International application number: PCT/CN2023/114012
(87) International publication number: WO 2024/093453

(57) **Abstract**

Provided is an air treatment device (1000). The air treatment device (1000) includes a housing (50) having a first air duct configured to supply air and a second air duct configured to discharge air and a rotary wheel assembly (100) rotatably disposed in the housing (50). The rotary wheel assembly (100) has an adsorption member (30) capable of adsorbing and releasing moisture. The rotary wheel assembly (100) is obliquely disposed in the housing (50).

## Description

### CROSS-REFERENCE TO RELATED APPLICATIONS

This application claims priorities to Chinese Patent Applications No. 202211352344. X, filed on October 31, 2022 and Chinese Patent Application No. 202211351591.8, filed on October 31, 2022, both of which are hereby incorporated by reference in their entireties.

### FIELD

The present disclosure relates to the technical field of air treatment, and in particular, to an air treatment device.

### BACKGROUND

In the related art, in order to prevent drying of indoor air from affecting a user's comfort level, some air treatment devices are internally provided with humidifiers, and the humidifiers usually need to be mounted with water tanks, water pipes, compressors, and the like, which are complicated and costly to mount, and are affected by water quality, leaving room for improvement.

### SUMMARY

The present disclosure aims to at least solve one of the technical problems existing in the prior art. To this end, an embodiment of the present disclosure provides an air treatment device, which has a good humidification effect, a simple structure, and a small structural size, and is convenient to mount.

The air treatment device according to embodiments of the present disclosure includes: a housing having a first air duct configured to supply air and a second air duct configured to discharge air; and a rotary wheel assembly rotatably disposed in the housing. The rotary wheel assembly has an adsorption member capable of adsorbing and releasing moisture. The rotary wheel assembly is obliquely disposed in the housing.

With the air treatment device according to the embodiments of the present disclosure, the rotary wheel assembly having the adsorption member is provided to adsorb and release the moisture in the air, which can adjust an air humidity and improve air conditions, thereby providing the good humidification effect. In addition, the rotary wheel assembly is unaffected by the air humidity and does not need to be equipped with components such as compressors and drainage pipes, which make the wheel assembly simple and convenient to install and low in cost, without affecting the aesthetics. Meanwhile, no large vibration and noise are generated to ensure use comfort. By obliquely disposing the rotary wheel assembly in the housing, a height of the whole machine and a space occupied by the whole machine may be reduced.

With the air treatment device according to the embodiments of the present disclosure, a part of the rotary wheel assembly is located at the first air duct, and another part of the rotary wheel assembly is located at the second air duct. The rotary wheel assembly has a diameter D, and the housing has a height H, where 0.3≤H/D≤0.8. By limiting the diameter of the rotary wheel assembly and the height of the housing, on the basis of satisfying requirements for an air volume and noise during use, a size of the whole machine is reduced, and manufacturing costs are lowered. Moreover, mounting and arrangement of the whole machine are facilitated, to facilitate popularization and application.

With the air treatment device according to the embodiments of the present disclosure, 0.4≤H/D≤0.65.

With the air treatment device according to the embodiments of the present disclosure, an angle between the rotary wheel assembly and a bottom of the housing is b, where 5°≤b≤75°.

The air treatment device according to the embodiments of the present disclosure further includes: a first fan disposed in the first air duct; and a second fan disposed in the second air duct. A size of the first fan is greater than or equal to a size of the second fan.

In some examples, a size of a wind wheel of the first fan is greater than or equal to a size of a wind wheel of the second fan.

In some examples, the housing includes: a first air inlet and a first air outlet that are in communication with the first air duct; and a second air inlet and a second air outlet that are in communication with the second air duct. The first air outlet and the second air inlet are located at one side of the housing; the second air outlet and the first air inlet are located at another side of the housing; the first fan is adjacent to the first air outlet; and the second fan is adjacent to the second air outlet.

In some examples, the first fan and the second fan are centrifugal fans.

The air treatment device according to the embodiments of the present disclosure further includes a rotary wheel bracket disposed in the housing and having a mounting space. The rotary wheel assembly is rotatably disposed in the mounting space.

The air treatment device according to the embodiments of the present disclosure further includes a driving assembly disposed at the rotary wheel assembly and configured to drive the rotary wheel assembly to rotate.

In some examples, the driving assembly includes a drive motor having a drive shaft, and the drive shaft is located on a rotation axis of the rotary wheel assembly and is configured to drive the rotary wheel assembly to rotate.

The air treatment device according to the embodiments of the present disclosure further includes: a housing having a first air duct configured to supply air and a second air duct configured to discharge air; a rotary wheel assembly rotatably disposed in the housing and having an adsorption member capable of adsorbing and releasing moisture; and a drive motor disposed at the rotary wheel assembly and having a drive shaft, the drive shaft being located on a rotational axis of the rotary wheel assembly and is configured to drive the rotary wheel assembly to rotate.

The air treatment device according to the embodiments of the present disclosure further includes a rotary wheel bracket disposed in the housing and having a mounting space. The rotary wheel assembly is rotatably disposed in the mounting space.

In some examples, the rotary wheel bracket includes a support plate and a first partition. The rotary wheel assembly is disposed at the support plate, and the first partition is disposed at a side of the support plate away from the rotary wheel assembly and located between the first air duct and the second air duct.

In some examples, the housing is provided with a mounting plate extending obliquely relative to an outer surface of the housing. The support plate is engaged with the mounting plate to obliquely mount the rotary wheel assembly in the housing.

With the air treatment device according to the embodiments of the present disclosure, the rotary wheel assembly is disposed in a direction inclined to a bottom plate of the housing. An angle between the rotary wheel assembly and the bottom plate of the housing is b, where 5°≤b≤75°.

In some examples, 20°≤b≤40°.

The air treatment device according to the embodiments of the present disclosure further includes: a first fan disposed in the first air duct; and a second fan disposed in the second air duct. The first fan and the second fan are located at one side of the rotary wheel assembly.

In some examples, a wind wheel of the first fan and a wind wheel of the second fan have a same size.

In some examples, the housing includes: a first air inlet and a first air outlet that are in communication with the first air duct; and a second air inlet and a second air outlet that are in communication with the second air duct. The first air outlet and the second air inlet are located at one side of the housing; the first fan is adjacent to the first air outlet; and the second fan is adjacent to the second air inlet.

The air treatment device according to the embodiments of the present disclosure further includes: a heating member disposed at the first air duct and located upstream of the rotary wheel assembly; and a purification assembly disposed at the first air duct and located upstream of the heating member. The heating member is adapted to introduce a heated gas into the rotary wheel assembly

Additional aspects and advantages of the present disclosure will be in part set forth below, become apparent in part from the following description, or can be learned by practice of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings, in which:
FIG. 1 is a schematic structural diagram of an air treatment device according to an embodiment of the present disclosure.
FIG. 2 is a partially cross-sectional view of a structure of an air treatment device according to an embodiment of the present disclosure.
FIG. 3 is a cross-sectional view of a first air duct according to an embodiment of the present disclosure.
FIG. 4 is a schematic structural diagram of a first fan according to an embodiment of the present disclosure.
FIG. 5 is a cross-sectional view of a first fan according to an embodiment of the present disclosure.
FIG. 6 is a partially schematic structural diagram of an air treatment device according to an embodiment of the present disclosure.
FIG. 7 is a schematic structural diagram of another air treatment device according to an embodiment of the present disclosure.
FIG. 8 is a cross-sectional view taken along line A-A in FIG. 7.
FIG. 9 is a cross-sectional view taken along line B-B in FIG. 7.
FIG. 10 is a cross-sectional view taken along line C-C in FIG. 7.
FIG. 11 is a cross-sectional view taken along line D-D in FIG. 7.
FIG. 12 is a diagram of an air volume-noise curve of an air treatment device according to an embodiment of the present disclosure.
FIG. 13 is a velocity streamline diagram of a flow field of a first air duct according to an embodiment of the present disclosure.
FIG. 14 is a velocity vector diagram of a flow field of a first air duct according to an embodiment of the present disclosure.

Reference numerals:
rotary wheel assembly 100, air treatment device 1000, first air duct 1001, second air duct 1002,
rotary wheel frame 10, adsorption member 30,
rotary wheel bracket 40, support plate 43, first partition 44,
housing 50, first air inlet 501, first air outlet 502, second air inlet 503, second air outlet 504, bottom plate 51, mounting plate 52,
drive motor 60, coupler 61, second partition 62,
first fan 71, second fan 72, heating member 80, and purification assembly 90.

### DETAILED DESCRIPTION

The embodiments of the present disclosure will be described in detail below, examples thereof are illustrated in the accompanying drawings, throughout which same or similar elements, or elements having same or similar functions, are denoted by same or similar reference numerals. The embodiments described below with reference to the accompanying drawings are exemplary, only used to explain the present disclosure, and should not be construed as limitation of the present disclosure.

In the description of the present disclosure, it needs to be understood that, orientation or position relationship indicated by terms such as "center", "longitudinal", "lateral", "length", "width", "thickness", "over", "below", "front", "back", "left", "right", "vertical", "horizontal", "top", "bottom", "in", "out", "clockwise", "anticlockwise", "axial", "radial" and "circumferential" is based on the orientation or position relationship shown in the accompanying drawings, and is merely for the convenience of describing the present disclosure and simplifying the description, rather than indicating or implying that the associated device or element must have a specific orientation, or be constructed and operated in a specific orientation, and therefore cannot be understood as a limitation on the present disclosure. In addition, the features associated with "first" and "second" may explicitly or implicitly include at least one of the features. In the description of the present disclosure, unless otherwise specifically defined, "plurality" means at least two.

In the description of the present disclosure, it needs to be noted that, unless otherwise clearly specified and limited, terms such as "install", "connect", "couple", and the like should be understood in a broad sense. For example, it may be a fixed connection or a detachable connection or connection as one piece; a mechanical connection or an electrical connection; a direct connection or an indirect connection through an intermediate; or internal communication of two components. For those of ordinary skill in the art, the specific meanings of the above terms in the present disclosure should be understood according to specific circumstances.

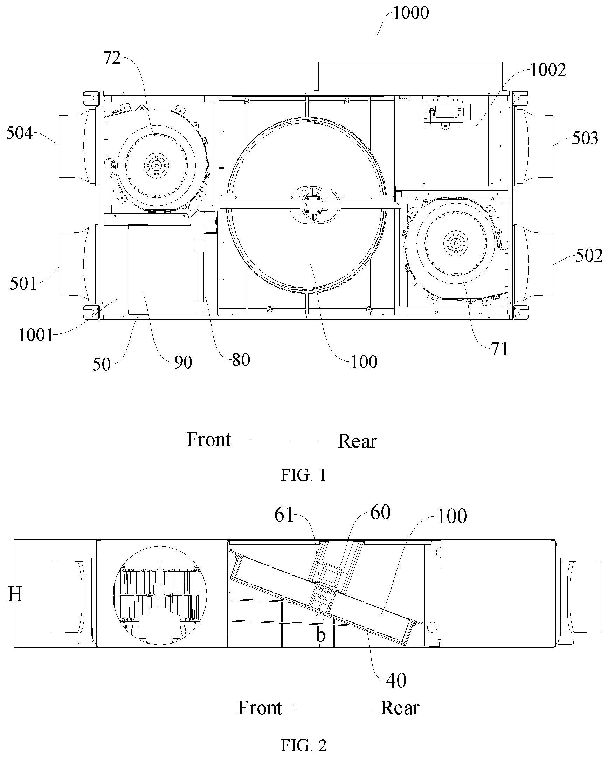

An air treatment device 1000 according to the embodiments of the present disclosure is described below with reference to FIG. 1 to FIG. 14.

As illustrated in FIG. 1 to FIG. 6, an air treatment device 1000 according to an embodiment of the present disclosure includes a housing 50 and a rotary wheel assembly 100. The housing 50 has a first air duct 1001 configured to supply air and a second air duct 1002 configured to discharge air, to realize air circulation.

The rotary wheel assembly 100 is rotatably disposed in the housing 50 and disposed in a direction inclined to a bottom plate 51 of the housing 50. The rotary wheel assembly 100 has an adsorption member 30 capable of adsorbing and releasing moisture. Through adsorption and release of the moisture by the adsorption member 30, an air humidity is adjusted, and a purpose of humidifying the air is realized.

Through experimentation, the applicant finds that in order to ensure use performance of the rotary wheel assembly 100 and a humidification effect or dehumidification effect on the air, a diameter of the rotary wheel assembly 100 has a predetermined limitation. However, in order to facilitate mounting of the whole machine, a height of the housing 50 also has a predetermined limitation. Therefore, the rotary wheel assembly 100 is obliquely disposed in the housing 50. The rotary wheel assembly 100 has a diameter D, and the housing 50 has a height H. When H/D is too large, i.e., the height of the housing 50 is too large, a size of the whole machine is affected, which increases costs, and makes the whole machine difficult to satisfy mounting and use in various occasions. When H/D is too small, a horizontal space occupied by the rotary wheel assembly 100 is caused to be too large, and the whole machine is also caused to become too large, which increases the cost, and makes mounting and application inconvenient. In addition, problems of a large wind resistance and an increase in noise in the air duct are also caused simultaneously. To this end, H/D is limited to range from 0.3 to 0.8, i.e., H/D may be 0.3. At this time, the height of the housing 50 may be reduced, making it convenient to be mounted on a ceiling. Meanwhile, the rotary wheel assembly 100 is obliquely disposed without generating significant wind resistance noise. H/D may also be 0.8. At this time, a length of the housing 50 may be reduced, to lower the cost and facilitate the mounting of the whole machine. Meanwhile, the rotary wheel assembly 100 is inclined at a larger angle, with a small wind resistance and low noise. H/D may also be any value ranging from 0.3 to 0.8, such as 0.4, 0.5, 0.6, or 0.7. Within this range, when requirements for an air volume and noise in the air duct are satisfied, a structural size of the whole machine may be reduced as much as possible, to lower manufacturing costs.

With the air treatment device 1000 according to the embodiments of the present disclosure, the rotary wheel assembly 100 having the adsorption member 30 is provided to adsorb and release the moisture in the air, which can adjust the air humidity and improve air conditions, thereby providing a good humidification effect. In addition, the rotary wheel assembly 100 is unaffected by the air humidity and does not need to be equipped with components such as compressors and drainage pipes, which make the wheel assembly 100 simple and convenient to install and low in cost, without affecting the aesthetics. Meanwhile, no large vibration and noise are generated to ensure use comfort. By obliquely disposing the rotary wheel assembly 100 in the housing 50, a height of the whole machine and a space occupied by the whole machine may be reduced, facilitating mounting and arrangement of the whole machine. By limiting the diameter of the rotary wheel assembly 100 and the height of the housing 50, on the basis of satisfying requirements for an air volume and noise during use, the size of the whole machine is reduced, and the manufacturing costs are lowered, to facilitate popularization and application.

According to some embodiments of the present disclosure, 0.4≤H/D≤0.65, and H/D may be 0.4, 0.56, 0.65, or the like. Within this range, the structural size of the whole machine may be reduced, to lower the manufacturing cost. Meanwhile, requirements for the wind resistance and noise in the air duct are satisfied, to ensure the air volume in the air duct. For example, a rotary wheel assembly 100 with a diameter of 1m is adopted. At this time, the height of the housing 50 may be designed to be 0.5m, and the rotary wheel assembly 100 may be obliquely disposed in the housing 50. Through extensive experimental simulations and analysis, the applicant finds that by limiting a ratio of the height of the housing 50 to the diameter of the rotary wheel assembly 100 within the aforementioned ration range, the height of the whole machine is reduced without causing the rotary wheel assembly 100 to occupy too much space in a horizontal direction, allowing a structure of the whole machine to be compact and occupy less space, with low costs. Meanwhile, a small wind resistance, uniform airflow, and small noise in the air duct may be ensured, and user's usage experience may be further improved.

As illustrated in FIG. 2, in some examples, an angle between the rotary wheel assembly 100 and a bottom of the housing 50 is b, where 5°≤b≤75°, i.e., b may be 5°, 75°, or any value ranging from 5° to 75°, such as 15°, 20°, 25°, 30°, 35°, 40°, 50°, or 65°. For example, H/D is 0.56, and the angle b between the rotary wheel assembly 100 and the bottom of the housing 50 is 30°. For another example, H/D is 0.50, and the angle b between the rotary wheel assembly 100 and the bottom of the housing 50 is 25°. A structural arrangement of the whole machine is reasonable and compact, the wind resistance in the air duct is small, and the noise in the air duct is low.

According to some embodiments of the present disclosure, the air treatment device 1000 further includes a first fan 71 disposed in the first air duct 1001 and a second fan 72 disposed in the second air duct 1002. A gas in the air duct is driven by the fan to flow, to realize functions of air supply and air discharge. The first fan 71 and the second fan 72 here may be centrifugal fans.

In some examples, a wind wheel diameter of the first fan 71 is D1, and a wind wheel diameter of the second fan 72 is D2. D1 may be equal to D2. Therefore, mounting of the two fans in the air duct is facilitated, without the need to distinguish the two fans during mounting, improving assembly efficiency. Meanwhile, when the two fans are mounted at one side of the rotary wheel assembly 100, the size of the whole machine may be reduced, making the structure of the whole machine more compact.

In some examples, in order to increase an air supply volume of the first air duct 1001, the first fan 71 in the first air duct 1001 may be designed to be larger in size, i.e., D1 may be greater than D2. Therefore, an indoor fresh air volume, air humidity, or the like may be increased, improving the user's usage experience. In other embodiments of the present disclosure, D2 may be greater than D1, which is specifically determined according to a mounting environment and a use environment, and is not limited here.

As illustrated in FIG. 1, in some examples, the housing 50 has a first air inlet 501, a first air outlet 502, a second air inlet 503, and a second air outlet 504. A first air duct 1001 is formed between the first air inlet 501 and the first air outlet 502, and a second air duct 1002 is formed between the second air inlet 503 and the second air outlet 504. The first air inlet 501 and the second air outlet 504 are simultaneously located at one side of the air treatment device 200 (a front side as illustrated in FIG. 1), and the first air outlet 502 and the second air inlet 503 are simultaneously located at another side of the air treatment device 1000 (a rear side as illustrated in FIG. 1). The air may be introduced from the first air inlet 501 into the first air duct 1001. The air in the first air duct 101 may be introduced from the first air outlet 502 into the indoor. The indoor air may be introduced from the second air inlet 503 into the second air duct 1002. The air in the second air duct 1002 may be discharged outwards from the second air outlet 504. In this way, an air change function of the air treatment device 1000 is realized.

The first fan 71 is adjacent to the first air outlet 502, and the second fan 72 is adjacent to the second air outlet 504. By disposing the fan adjacent to the air outlet, sufficient air volume in each air duct may be ensured, and an air exchange effect of the air treatment device 1000 is further ensured.

In some examples, the first fan 71 and the second fan 72 may also be located at one side of the rotary wheel assembly 100. For example, the first fan 71 is adjacent to the first air outlet 502, and the second fan 72 is adjacent to the second air inlet 503. By disposing two fans occupying a large internal space of the whole machine at one side of the rotary wheel assembly 100, fewer structural parts at the other side of the rotary wheel assembly 100 are provided. Therefore, the size of the whole machine can be reduced, making the structure of the whole machine more compact, and facilitating the mounting of the whole machine to a required position.

According to some embodiments of the present disclosure, the air treatment device 1000 further includes a driving assembly disposed at the rotary wheel assembly 100 and configured to drive the rotary wheel assembly 100 to rotate. The driving assembly here may directly drive the rotary wheel assembly 100 to rotate, or drive the rotary wheel assembly 100 to rotate through a transmission member, such as through a gear, a belt, or the like.

In some examples, the driving assembly includes a drive motor 60 having a drive shaft, and the drive shaft is located on a rotation axis of the rotary wheel assembly 100, i.e., the drive shaft of the drive motor 60 is collinear with the rotation axis of the rotary wheel assembly 100, thereby driving the rotary wheel assembly 100 to rotate. By disposing the drive shaft of the drive motor 60 on the rotation axis of the rotary wheel assembly 100, the drive motor 60 may directly drive the rotary wheel assembly 100 to rotate, which realizes a centrally direct drive manner, without the need to provide gears, gear rings, belts, and other transmission structures, reducing parts. In this way, an overall structure can be made more compact, and an overall size can be further reduced, facilitating the mounting of the whole machine. Moreover, the direct drive manner is more reliable and stable, which improves a service life of the product and a user experience.

It should be noted that the drive motor 60 herein may adopt a speed reduction motor or a stepping motor. Therefore, when the rotary wheel assembly 100 is driven to rotate, an operation speed of the rotary wheel assembly 100 may be adjusted, enabling the rotary wheel assembly 100 to operate at a slow speed. For example, the rotary wheel assembly 100 rotates at a rotational speed ranging from 0.5rpm to 1rpm, which further facilitates an adjustment of the air humidity by the rotary wheel assembly 100.

According to some embodiments of the present disclosure, the adsorption member 30 may be made of silica gel, molecular sieve, MOF, or other adsorbent materials. The adsorption member 30 may adsorb the moisture in the air at a normal temperature or a low temperature to dry the air, and may release the moisture at a high temperature to humidify the air, which eliminates the need to additionally provide a water tank for humidification, a built-in compressor, or the like, thereby saving production costs.

According to some embodiments of the present disclosure, the first air duct 1001 is internally provided with a purification assembly 90 and a heating member 80, and the purification assembly 90 is located upstream of the heating member 80. The purification assembly 90 may purify outside air and introduce the purified outside air into the housing 50. The heating member 80 may heat air flowing through the heating member 80, and water vapor may be generated when the heating member 80 heats the air, enabling the rotary wheel element 100 to absorb more water. Meanwhile, the hot air may take away the moisture absorbed by the rotary wheel element 100, and then release the moisture into the indoor, which can realize an adjustment of an indoor humidity.

In some examples, the rotary wheel assembly 100 is mounted in the air treatment device 1000. Half of the adsorption member 30 is disposed in the first air duct 1001, which is a desorption region of the adsorption member, and the other half of the adsorption member 30 is disposed in the second air duct 1002, which is an adsorption region of the adsorption member. The adsorption member 30 may automatically adsorb water vapor passing through the adsorption member at the normal temperature. When the heating member operates, the adsorption member 30 may automatically release the previously adsorbed water vapor when a high-temperature air flow passes through the adsorption member 30. By driving the rotary wheel assembly 100 to rotate by the drive motor 60, it can be realized that the moisture in the air is absorbed in the adsorption region, and then desorbed by the heated air in the desorption region, thereby realizing the adjustment of the indoor humidity.

In some examples, the purification assembly 90 may include two filters, and the two filters may separately filter different impurities to improve a purification effect of the purification assembly 90. In other embodiments of the present disclosure, a filter is also provided in the second air duct 1002 to filter and clean air discharged from the indoor, which prevents dust and the like from entering the second air duct 1002, facilitates maintenance, and lowers maintenance costs.

As illustrated in FIG. 2, according to some embodiments of the present disclosure, a rotary wheel bracket 40 is provided in the housing 50 and has a mounting space. The rotary wheel assembly 100 is disposed and rotatable in the mounting space. A space for mounting of the rotary wheel assembly 100 is defined by providing the rotary wheel bracket 40, which can facilitate fixation of the rotary wheel assembly 100 and improve stability of the rotary wheel assembly 100 when rotating.

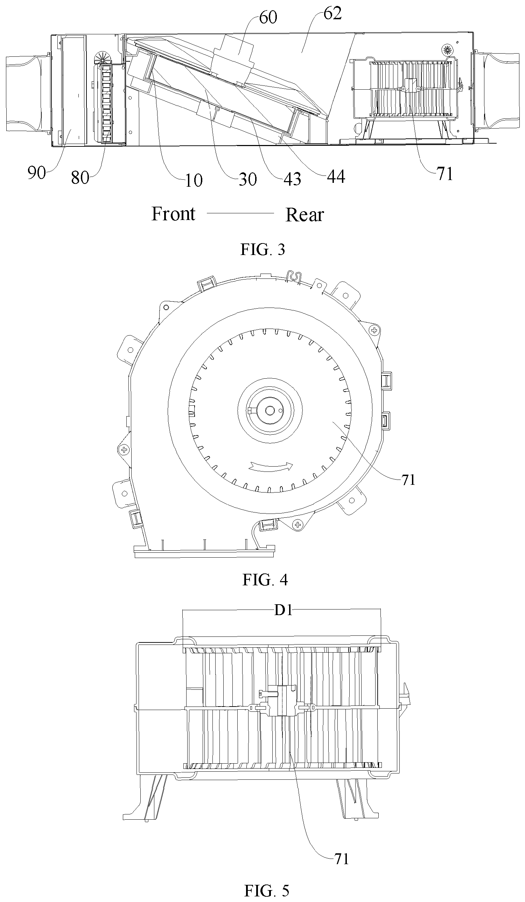

As illustrated in FIG. 3, according to some embodiments of the present disclosure, the rotary wheel bracket 40 includes a support plate 43 and a first partition 44. The rotary wheel assembly 100 is disposed at the support plate 43. A mounting space 401 may be defined by the support plate 43. The rotary wheel assembly 100 is mounted at an upper side of the support plate 43. The first partition 44 is disposed at a lower side of the support plate 43. The first partition 44 is located between the first air duct 1001 and the second air duct 1002, making the two air ducts separated. An extending direction of the first partition 44 is the same as a radial direction of the rotary wheel assembly 100. As illustrated in FIG. 3, the first partition 44 extends in a front-rear direction. When the rotary wheel assembly 100 is mounted in the air treatment device 1000, the first partition 44 may be welded and engaged with the housing 50 or be fixed and connected to the housing 50 through a fastener. In addition, the support plate 43 is provided with a connection rib. A position-limiting groove is formed at a lower surface of the connection rib. The first partition 44 may be inserted and engaged with the position-limiting groove. Therefore, a connection between the first partition 44 and the support plate 43 is realized. The support plate 43 may be fixed on a mounting plate 52 in the housing 50 through the fastener. By providing the first partition 44 and the support plate 43, a structural strength of the rotary wheel bracket 40 may be improved, and the rotary wheel assembly 100 may be further effectively supported.

In other embodiments of the present disclosure, the first partition 44 and the support plate 43 may be integrally formed. Therefore, parts can be reduced, and assembly of the whole machine is facilitated.

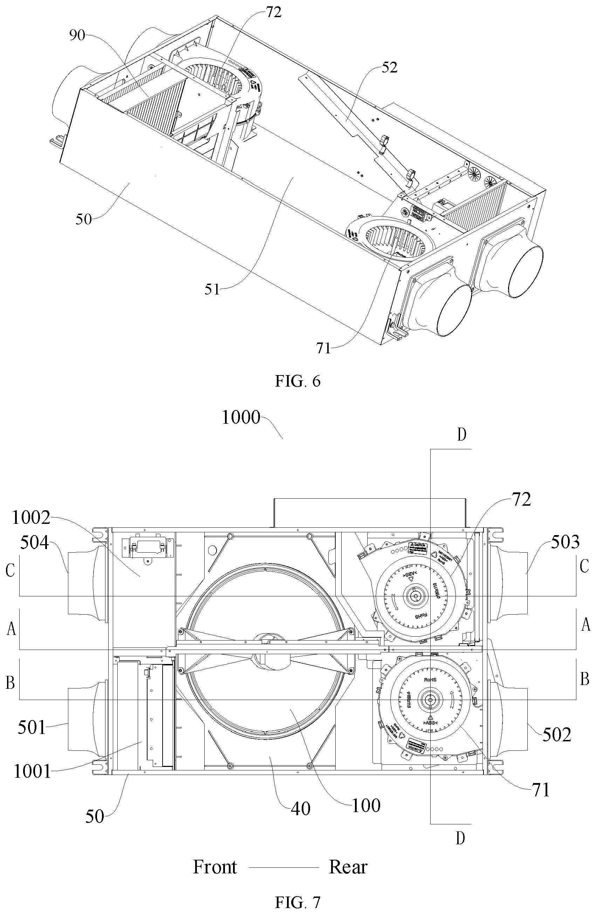

As illustrated in FIG. 6, in some examples, the housing 50 is internally provided with the mounting plate 52. The mounting plate 52 extends obliquely relative to an outer surface of the housing 50, and the support plate 43 of the rotary wheel bracket 40 may be engaged with the mounting plate 52. For example, the support plate 43 of the rotary wheel bracket 40 is connected to the mounting plate 52 by the fastener, making the support plate 43 obliquely extend roughly. Therefore, the rotary wheel assembly 100 can be obliquely mounted inside the housing 50, and sliding of the rotary wheel assembly 100 is avoided under action of the fastener, with good overall structure stability, which further ensures that the rotary wheel assembly 100 is rotatable smoothly.

In some examples, the housing 50 further has a motor bracket. The motor bracket is located above the rotary wheel assembly 100, and may be hoisted on a top plate of the housing 50. The drive motor 60 is mounted on the motor bracket. Therefore, mounting of the drive motor 60 is realized.

In some examples, a second partition 62 is also provided above the rotary wheel assembly 100, and may be inserted into a groove of the motor bracket. An upper end or a side part of the second partition 62 may also be connected to the housing 50. By providing the second partition 62, a predetermined support effect may be provided for an upper part of the rotary wheel assembly 100, to improve mounting stability of the motor.

In addition, while the first partition 44 and the second partition 62 play a support role for the overall structure, the first partition 44 and the second partition 62 may divide a mounting region of the rotary wheel assembly into a first air region 201 and a second air region 202, causing a part of the rotary wheel assembly 100 to be located in the first air region 201 and another part of the rotary wheel assembly 100 to be located in the second air region 202. The first air region 201 is located in the first air duct, and the second air region 202 is located in the second air duct. A half of the adsorption member 30 is disposed in the first air duct, and the other half of the adsorption member 30 is disposed in the second air duct, i.e., the two partitions may serve to divide left and right air ducts inside the device.

In some examples, the first partition 44 and the second partition 62 generally form a triangle. An upper surface of the first partition 44 gradually inclines downwards from front to rear, and a lower surface of the first partition 44 may be engaged and connected to the housing 50. An upper surface of the support plate 43 extends in the same direction as the upper surface of the support plate 43. A lower surface of the second partition 62 gradually inclines downwards from front to rear, and an upper surface of the second partition 62 may be engaged and connected to the housing 50. The rotary wheel assembly 100 may be sandwiched between the second partition 62 and the support plate 43, causing the rotary wheel assembly 100 to incline downwards from front to rear. By obliquely disposing the rotary wheel assembly 100, a thickness space occupied may be reduced, i.e., a size of the whole machine in an up-down direction is reduced, to improve the aesthetics of its appearance, and mounting and use of the air treatment device 1000 in different scenarios are facilitated simultaneously.

In some examples, the support plate 43 is provided with an air guide plate, and the air guide plate may surround a part of the mounting space 401 and play a role in guiding an internal airflow. The air guide plate may be disposed above the rotary wheel assembly 100, to facilitate that a part of the airflow flows out smoothly without flowing through the rotary wheel assembly 100, reducing the resistance. The air guide plate may also be disposed below the rotary wheel assembly 100, to facilitate that most of the airflow may flow through the rotary wheel assembly 100, causing the adsorption member 30 to absorb or release the moisture.

As illustrated in FIG. 2, according to some embodiments of the present disclosure, the drive motor 60 is engaged with the rotary wheel assembly 100 through a coupler 61. By providing the coupler 61, the coupler 61 rotates together with the drive shaft during motion and power transmission, to avoid occurrence of a disengagement phenomenon and prevent the rotary wheel assembly 100 from bearing excessive load simultaneously, playing a role of overload protection.

In some examples, a middle part of the rotary wheel assembly 100 has a connection hole. The drive motor 60 is connected and mounted on the motor bracket by bolts. The coupler 61 is connected and mounted on the drive motor 60 by bolts. The drive shaft of the drive motor 60 is connected to the coupler 61, and then the coupler 61 is inserted into the connection hole of the rotary wheel assembly 100. The connection hole may be a special-shaped hole, allowing the coupler 61 to be engaged with the rotary wheel assembly 100 through the special-shaped hole. The coupler 61 may also be connected to the rotary wheel assembly 100 by the fastener. Therefore, driving of the rotary wheel assembly 100 by the drive motor 60 is realized. In this embodiment, by adopting the centrally direct drive manner, the drive motor 60 is engaged with the coupler 61 to directly drive a humidity adjustment rotary wheel to operate. On the one hand, a structure of a rotary wheel device 200 may be made more compact. On the other hand, types of parts may be reduced, and mounting and maintenance are convenient.

As illustrated in FIG. 3, in some examples, the rotary wheel assembly 100 includes a rotary wheel frame 10 and an adsorption member 30. An accommodation space is defined by the rotary wheel frame 10 and may be in communication with outside world. The adsorption member 30 may be disposed in the accommodation space. The motor bracket may be engaged with the rotary wheel frame 10 through a bearing, and the rotary wheel bracket 40 may also be engaged with the rotary wheel frame 10 through the bearing. Therefore, the stability of the rotary wheel assembly 100 during rotation can be improved. The rotary wheel frame 10 adopts an integrated structure design and may be designed in a form of inner and outer circles connected by the connection rib, with the inner and outer circles disposed concentrically. Therefore, problems of axial runout and radial runout caused by a shaft misalignment of the inner and outer rings during manufacturing can be reduced, and operation smoothness and reliability of the rotary wheel device can also be increased.

According to some embodiments of the present disclosure, the air treatment device 1000 may communicate the indoor with the outdoor. When the air treatment device 1000 operates, air at an outdoor side enters the housing 50 from the first air inlet 501, passes through the rotary wheel assembly 100 after flowing through the purification assembly 90 and being heated by the heating member 80, and then is transmitted into the indoor from the first air outlet 502 by the first fan 71, to deliver purified and humidified fresh air to the indoor. Meanwhile, air at an indoor side enters the housing 50 from the second air inlet 503, may pass through the rotary wheel assembly 100 after flowing through a filtering mesh and a sensor, and then is discharged from the second air outlet 504 by the second fan 72, to form a circulation and continuously improve the indoor air. It can be understood that the rotary wheel assembly 100 is controlled to rotate by the drive motor 60 of the rotary wheel assembly 100 and may absorb and utilize moisture in air discharged at the indoor side, to humidify the fresh air, and a rotary wheel motor is controlled by a circuit board.

The air treatment device 1000 includes a first operation mode and a second operation mode, and the first operation mode is a humidification mode. In winter, the indoor air is low in temperature and dry, a system operates the humidification mode, the rotary wheel assembly 100 operates at a low rotational speed, and the heating member 80 is turned on. The first air duct 1001 sucks air from the outside, and the air reaches a high-temperature state when flowing through the rotary wheel assembly 100. In the high-temperature state, the air passes through the rotary wheel assembly 100 to take away the moisture on the rotary wheel assembly 100 and enters the indoor side to achieve humidification and fresh air replacement effects. Meanwhile, the air of the indoor side enters the second air duct 1002 and is in a normal temperature state. When the air flows through the rotary wheel assembly 100, the moisture in the air is absorbed by the adsorption member 30, and then the dry air is discharged outdoors. The rotary wheel assembly 100 is driven by the drive motor 60 to rotate, allowing a region where the moisture is absorbed to rotate into the first air duct 1001 and to be brought back indoors during air inlet from the outdoor side. Meanwhile, a region where the moisture on the adsorption member 30 is taken away rotates into the second air duct 1002 to continue to absorb the moisture, thereby continuously humidifying the indoor and replacing the fresh air.

The second operation mode is a heat recovery mode. In an exemplary embodiment of the present disclosure, in summer, when the indoor air is high in temperature and humid, the rotary wheel assembly 100 operates at a high rotational speed, and the heating member 80 is turned off. The first air duct 1001 sucks air from the outside. When the air passes through the rotary wheel assembly 100, the rotary wheel assembly 100 absorbs moisture and heat in the air, and then transmits the moisture and heat into the indoor to achieve cooling and dehumidification effects. Meanwhile, the second air duct 1002 sucks air from the indoor. When the air passes through the rotary wheel assembly 100, the high-temperature air takes away the moisture on the rotary wheel, thereby discharging the humid air.

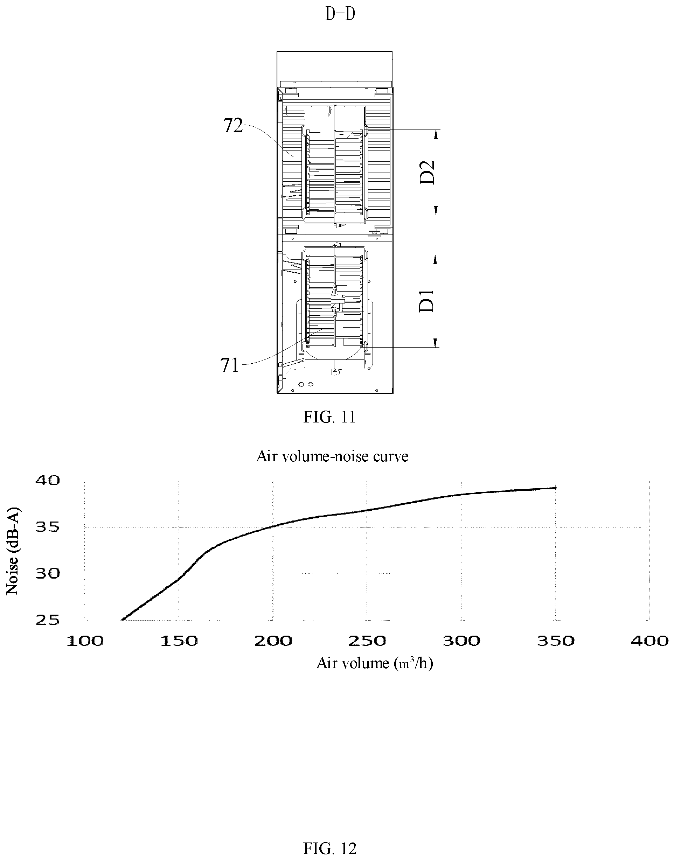

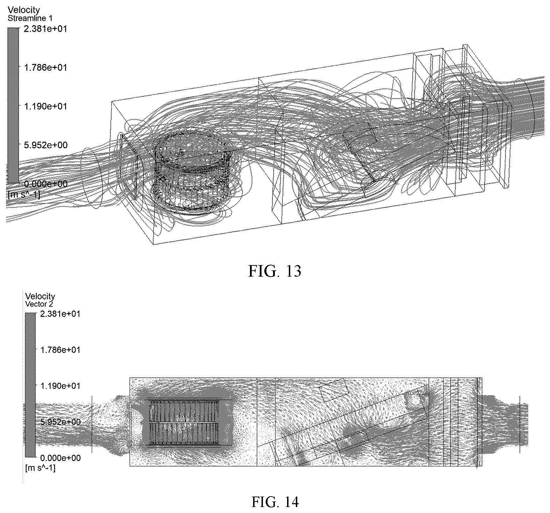

FIG. 12 illustrates a schematic diagram of a relationship between an air volume and noise of the air treatment device 1000 simulated by the applicant. By adopting the above design, with the operation of the fan, the air volume increases, but a rising speed of the noise slows down. Even if the air volume is increased to 350 m³/h, the noise is still lower than 40 dB-A, i.e., the noise is also low on the basis of satisfying requirements for a daily air volume, which can ensure the use comfort. According to a streamline diagram of FIG. 13 and a velocity vector diagram of FIG. 14, it can be seen that by adopting the above structure, an airflow inside the air duct is uniform, with a low resistance and low noise. Therefore, user's requirements for air volume and comfort can be satisfied, and the user's usage experience can be satisfied.

As illustrated in FIG. 7 to FIG. 14, according to an embodiment of the present disclosure, the air treatment device 1000 includes a housing 50, a rotary wheel assembly 100, and a drive motor 60. The housing 50 has a first air duct 1001 configured to supply air and a second air duct 1002 configured to discharge air, to realize the air circulation.

The rotary wheel assembly 100 is rotatably disposed in the housing 50 and disposed in the direction inclined to the bottom plate 51 of the housing 50. The rotary wheel assembly 100 has the adsorption member 30 capable of adsorbing and releasing the moisture. Through the adsorption and release of the moisture by the adsorption member 30, the air humidity is adjusted, and the purpose of humidifying the air is realized.

The drive motor 60 is disposed on the rotary wheel assembly 100 and has a drive shaft located on a rotation axis of the rotary wheel assembly 100, i.e., the drive shaft of the drive motor 60 is collinear with the rotation axis of the rotary wheel assembly 100, thereby driving the rotary wheel assembly 100 to rotate.

With the air treatment device 1000 according to the embodiments of the present disclosure, the rotary wheel assembly 100 having the adsorption member 30 is provided to adsorb and release the moisture in the air, which can adjust the air humidity and improve the air conditions, thereby providing the good humidification effect. In addition, the rotary wheel assembly 100 is unaffected by the air humidity and does not need to be equipped with components such as compressors and drainage pipes, which make the wheel assembly simple and convenient to install and low in cost, without affecting the aesthetics. Meanwhile, no large vibration and noise are generated to ensure the use comfort. By obliquely disposing the rotary wheel assembly 100 in the housing 50, the height of the whole machine may be reduced. By disposing the drive shaft of the drive motor 60 on the rotation axis of the rotary wheel assembly 100, the drive motor 60 may directly drive the rotary wheel assembly 100 to rotate, which realizes the centrally direct drive manner, without the need to provide gears, gear rings, belts, and other transmission structures, reducing parts. In this way, the overall structure can be made more compact, and the overall size can be further reduced, facilitating the mounting of the whole machine. Moreover, the direct drive manner is more reliable and stable, which improves the service life of the product and the user experience.

It should be noted that the drive motor 60 herein may adopt the speed reduction motor or the stepping motor. Therefore, when the rotary wheel assembly 100 is driven to rotate, the operation speed of the rotary wheel assembly 100 may be adjusted, enabling the rotary wheel assembly 100 to operate at the slow speed. For example, the rotary wheel assembly 100 rotates at the rotational speed ranging from 0.5rpm to 1rpm, which further facilitates the adjustment of the air humidity by the rotary wheel assembly 100.

The adsorption member 30 may be made of silica gel, molecular sieve, MOF, or other adsorbent materials. The adsorption member 30 may adsorb the moisture in the air at the normal temperature or the low temperature to dry the air, and may release the moisture at the high temperature to humidify the air, which eliminates the need to additionally provide the water tank for humidification, the built-in compressor, or the like, thereby saving the production costs.

According to some embodiments of the present disclosure, the first air duct 1001 is internally provided with the purification assembly 90 and the heating member 80, and the purification assembly 90 is located upstream of the heating member 80. The purification assembly 90 may purify the outside air and introduce the purified outside air into the housing 50. The heating member 80 may heat the air flowing through the heating member 80, and the water vapor may be generated when the heating member 80 heats the air, enabling the rotary wheel element 100 to absorb more water. Meanwhile, the hot air may take away the moisture absorbed by the rotary wheel element 100, and then release the moisture into the indoor, which can realize the adjustment of the indoor humidity.

In some examples, the rotary wheel assembly 100 is mounted in the air treatment device 1000. Half of the adsorption member 30 is disposed in the first air duct 1001, which is the desorption region of the adsorption member, and the other half of the adsorption member 30 is disposed in the second air duct 1002, which is the adsorption region of the adsorption member. The adsorption member 30 may automatically adsorb the water vapor passing through the adsorption member at the normal temperature. When the heating member operates, the adsorption member 30 may automatically release the previously adsorbed water vapor when the high-temperature air flow passes through the adsorption member 30. By driving the rotary wheel assembly 100 to rotate by the drive motor 60, it can be realized that the moisture in the air is absorbed in the adsorption region, and then desorbed by the heated air in the desorption region, thereby realizing the adjustment of the indoor humidity.

In some examples, the purification assembly 90 may include two filters, and the two filters may separately filter different impurities to improve the purification effect of the purification assembly 90. In other embodiments of the present disclosure, a filter is also provided in the second air duct 1002 to filter and clean the air discharged from the indoor, which prevents the dust and the like from entering the second air duct 1002, facilitates maintenance, and lowers the maintenance costs.

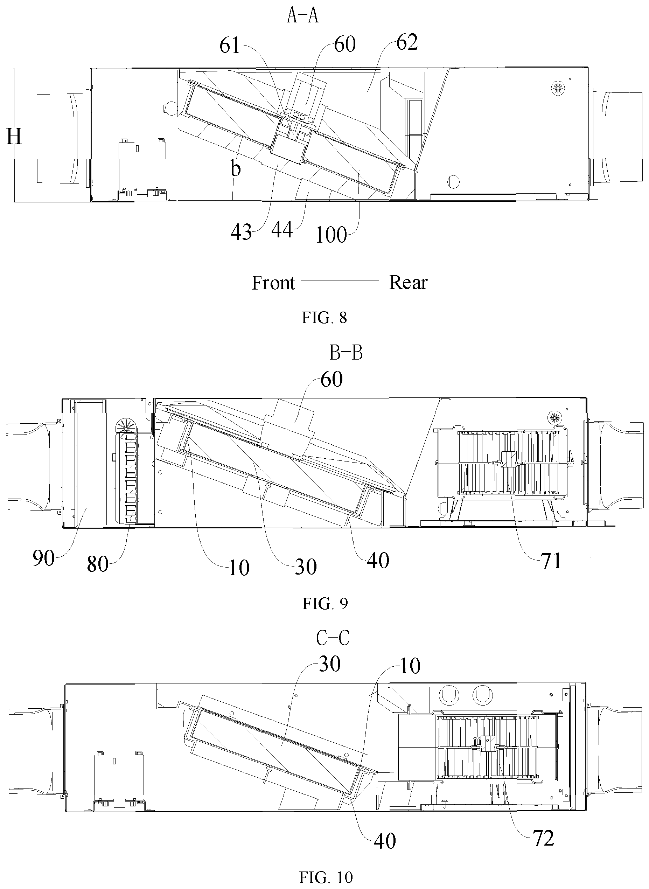

As illustrated in FIG. 9, according to some embodiments of the present disclosure, the rotary wheel bracket 40 is provided in the housing 50 and has the mounting space. The rotary wheel assembly 100 is disposed and rotatable in the mounting space. The space for the mounting of the rotary wheel assembly 100 is defined by providing the rotary wheel bracket 40, which can facilitate the fixation of the rotary wheel assembly 100 and improve the stability of the rotary wheel assembly 100 when rotating.

As illustrated in FIG. 8, according to some embodiments of the present disclosure, the rotary wheel bracket 40 includes the support plate 43 and the first partition 44. The rotary wheel assembly 100 is disposed at the support plate 43. The mounting space 401 may be defined by the support plate 43. The rotary wheel assembly 100 is mounted at the upper side of the support plate 43. The first partition 44 is disposed at the lower side of the support plate 43. The first partition 44 is located between the first air duct 1001 and the second air duct 1002, making the two air ducts separated. The extending direction of the first partition 44 is the same as the radial direction of the rotary wheel assembly 100. As illustrated in FIG. 3, the first partition 44 extends in the front-rear direction. When the rotary wheel assembly 100 is mounted in the air treatment device 1000, the first partition 44 may be welded and engaged with the housing 50 or be fixed and connected to the housing 50 through the fastener. In addition, the support plate 43 is provided with the connection rib. The position-limiting groove is formed at the lower surface of the connection rib. The first partition 44 may be inserted and engaged with the position-limiting groove. Therefore, the connection between the first partition 44 and the support plate 43 is realized. The support plate 43 may be fixed on the mounting plate 52 in the housing 50 through the fastener. By providing the first partition 44 and the support plate 43, the structural strength of the rotary wheel bracket 40 may be improved, and the rotary wheel assembly 100 may be further effectively supported.

In other embodiments of the present disclosure, the first partition 44 and the support plate 43 may be integrally formed. Therefore, the number of the parts can be reduced, and the assembly of the whole machine is facilitated.

As illustrated in FIG. 6, in some examples, the housing 50 is internally provided with the mounting plate 52. The mounting plate 52 extends obliquely relative to the outer surface of the housing 50, and the support plate 43 of the rotary wheel bracket 40 may be engaged with the mounting plate 52. For example, the support plate 43 of the rotary wheel bracket 40 is connected to the mounting plate 52 by the fastener, making the support plate 43 obliquely extend roughly. Therefore, the rotary wheel assembly 100 can be obliquely mounted inside the housing 50, and the sliding of the rotary wheel assembly 100 is avoided under the action of the fastener, with good overall structure stability, which further ensures that the rotary wheel assembly 100 is rotatable smoothly.

In some examples, the housing 50 further has the motor bracket. The motor bracket is located above the rotary wheel assembly 100, and may be hoisted on the top plate of the housing 50. The drive motor 60 is mounted on the motor bracket. Therefore, the mounting of the drive motor 60 is realized.

In some examples, a second partition 62 is also provided above the rotary wheel assembly 100, and may be inserted into the groove of the motor bracket. The upper end or the side part of the second partition 62 may also be connected to the housing 50. By providing the second partition 62, the predetermined support effect may be provided for the upper part of the rotary wheel assembly 100, to improve the mounting stability of the motor.

In addition, while the first partition 44 and the second partition 62 play the support role for the overall structure, the first partition 44 and the second partition 62 may divide the mounting region of the rotary wheel assembly into the first air region 201 and the second air region 202, causing a part of the rotary wheel assembly 100 to be located in the first air region 201 and another part of the rotary wheel assembly 100 to be located in the second air region 202. The first air region 201 is located in the first air duct, and the second air region 202 is located in the second air duct. A half of the adsorption member 30 is disposed in the first air duct, and the other half of the adsorption member 30 is disposed in the second air duct, i.e., the two partitions may serve to divide the left and right air ducts inside the device.

In some examples, the first partition 44 and the second partition 62 generally form the triangle. The upper surface of the first partition 44 gradually inclines downwards from front to rear, and the lower surface of the first partition 44 may be engaged and connected to the housing 50. The upper surface of the support plate 43 extends in the same direction as the upper surface of the support plate 43. The lower surface of the second partition 62 gradually inclines downwards from front to rear, and the upper surface of the second partition 62 may be engaged and connected to the housing 50. The rotary wheel assembly 100 may be sandwiched between the second partition 62 and the support plate 43, causing the rotary wheel assembly 100 to incline downwards from front to rear. By obliquely disposing the rotary wheel assembly 100, the thickness space occupied may be reduced, i.e., the size of the whole machine in the up-down direction is reduced, to improve the aesthetics of its appearance, and the mounting and use of the air treatment device 1000 in different scenarios are facilitated simultaneously.

In some examples, the support plate 43 is provided with the air guide plate, and the air guide plate may surround a part of the mounting space 401 and play the role in guiding the internal airflow. The air guide plate may be disposed above the rotary wheel assembly 100, to facilitate that a part of the airflow flows out smoothly without flowing through the rotary wheel assembly 100, reducing the resistance. The air guide plate may also be disposed below the rotary wheel assembly 100, to facilitate that most of the airflow may flow through the rotary wheel assembly 100, causing the adsorption member 30 to absorb or release the moisture.

As illustrated in FIG. 8, according to some embodiments of the present disclosure, the drive motor 60 is engaged with the rotary wheel assembly 100 through the engagement with the coupler 61. By providing the coupler 61, the coupler 61 rotates together with the drive shaft during the motion and power transmission, to avoid the occurrence of the disengagement phenomenon and prevent the rotary wheel assembly 100 from bearing excessive load simultaneously, playing the role of overload protection.

In some examples, the middle part of the rotary wheel assembly 100 has a connection hole. The drive motor 60 is connected and mounted on the motor bracket by bolts. The coupler 61 is connected and mounted on the drive motor 60 by bolts. The drive shaft of the drive motor 60 is connected to the coupler 61, and then the coupler 61 is inserted into the connection hole of the rotary wheel assembly 100. The connection hole may be the special-shaped hole, allowing the coupler 61 to be engaged with the rotary wheel assembly 100 through the special-shaped hole. The coupler 61 may also be connected to the rotary wheel assembly 100 by the fastener. Therefore, the driving of the rotary wheel assembly 100 by the drive motor 60 is realized. In this embodiment, by adopting the centrally direct drive manner, the drive motor 60 is engaged with the coupler 61 to directly drive the humidity adjustment rotary wheel to operate. On the one hand, the structure of the rotary wheel device 200 may be made more compact. On the other hand, the types of parts may be reduced, and the mounting and maintenance are convenient.

As illustrated in FIG. 10, in some examples, the rotary wheel assembly 100 includes the rotary wheel frame 10 and the adsorption member 30. The accommodation space is defined by the rotary wheel frame 10 and may be in communication with the outside world. The adsorption member 30 may be disposed in the accommodation space. The motor bracket may be engaged with the rotary wheel frame 10 through the bearing, and the rotary wheel bracket 40 may also be engaged with the rotary wheel frame 10 through the bearing. Therefore, the stability of the rotary wheel assembly 100 during rotation can be improved. The rotary wheel frame 10 adopts the integrated structure design and may be designed in the form of inner and outer circles connected by the connection rib, with the inner and outer circles disposed concentrically. Therefore, the problems of the axial runout and radial runout caused by the shaft misalignment of the inner and outer rings during manufacturing can be reduced, and the operation smoothness and reliability of the rotary wheel device can also be increased.

According to some embodiments of the present disclosure, in order to ensure the use performance of the rotary wheel assembly 100 and the humidification effect or dehumidification effect on the air, the diameter of the rotary wheel assembly 100 has a predetermined limitation. At this time, when the rotary wheel assembly 100 is disposed vertically, the height of the whole machine is too high, thereby affecting the mounting of the whole machine. When the rotary wheel assembly 100 is mounted horizontally, a poor air duct of the whole machine is caused, with a large wind resistance and loud noise, affecting an air discharge effect. Therefore, the angle b between the rotary wheel assembly 100 and the bottom plate 51 of the housing 50 is limited to range from 5° to 75°, i.e., b may be 5°, 75°, or any value ranging from 5° to 75°, such as 15°, 30°, 50°, 65°, or the like.

In some examples, 20°≤b≤40°. For example, b may be 20°, 25°, 35°, 40°, or the like. After extensive experimental simulations and analysis, the applicant finds that under the above inclination angles, the height of the whole machine is reduced without causing the rotary wheel assembly 100 to occupy too much space in the horizontal direction, allowing the structure of the whole machine to be compact and occupy less space, with low costs. Meanwhile, the small wind resistance, uniform airflow, and small noise in the air duct may be ensured, and the user's usage experience may be further improved.

In some examples, in order to ensure the use performance of the rotary wheel assembly 100 and the humidification effect or dehumidification effect on the air, the diameter of the rotary wheel assembly 100 has a predetermined limitation. However, in order to facilitate the mounting of the whole machine, the height of the housing 50 also has a predetermined limitation. Therefore, the rotary wheel assembly 100 is obliquely disposed in the housing 50. The rotary wheel assembly 100 has the diameter D, and the housing 50 has the height H. When H/D is too large, i.e., the height of the housing 50 is too large, the size of the whole machine is affected, which increases the cost, and makes the whole machine difficult to satisfy the mounting and use of the whole machine in various occasions. When H/D is too small, the horizontal space occupied by the rotary wheel assembly 100 is caused to be too large, and the whole machine is also caused to become too large, which increases the cost, and makes the mounting and application inconvenient. In addition, the problems of the large wind resistance and the increase of noise in the air duct are also caused simultaneously. To this end, H/D is limited to range from 0.3 to 0.8, i.e., H/D may be 0.3. At this time, the height of the housing 50 may be reduced, making it convenient to be mounted on the ceiling. Meanwhile, the rotary wheel assembly 100 is obliquely disposed without generating significant wind resistance noise. H/D may also be 0.8. At this time, the length of the housing 50 may be reduced, to lower the cost and facilitate the mounting of the whole machine. Meanwhile, the rotary wheel assembly 100 is inclined at the larger angle, with the small wind resistance and low noise. H/D may also be any value ranging from 0.3 to 0.8, such as 0.4, 0.5, 0.6, or 0.7. Within this range, when the requirements for the air volume and noise in the air duct are satisfied, the structural size of the whole machine may be reduced as much as possible, to lower the manufacturing costs.

In some examples, 0.4≤H/D≤0.65, and H/D may be 0.4, 0.56, 0.65, or the like. Within this range, the structural size of the whole machine may be reduced, to lower the manufacturing cost. Meanwhile, the requirements for the wind resistance and noise in the air duct are satisfied, to ensure the air volume in the air duct. For example, the rotary wheel assembly 100 with the diameter of 1m is adopted. At this time, the height of the housing 50 may be designed to be 0.5m, and the rotary wheel assembly 100 may be obliquely disposed in the housing 50. Through extensive experimental simulations and analysis, the applicant finds that by limiting the ratio of the height of the housing 50 to the diameter of the rotary wheel assembly 100 within the aforementioned ration range, the height of the whole machine is reduced without causing the rotary wheel assembly 100 to occupy too much space in the horizontal direction, allowing the structure of the whole machine to be compact and occupy less space, with the low cost. Meanwhile, the small wind resistance, uniform airflow, and small noise in the air duct may be ensured, and the user's usage experience may be further improved.

In some examples, the angle between the rotary wheel assembly 100 and the bottom of the housing 50 is b, where 5°≤b≤75°, i.e., b may be 5°, 75°, or any value ranging from 5° to 75°, such as 15°, 20°, 25°, 30°, 35°, 40°, 50°, or 65°. For example, H/D is 0.56, and the angle b between the rotary wheel assembly 100 and the bottom of the housing 50 is 30°. For another example, H/D is 0.50, and the angle b between the rotary wheel assembly 100 and the bottom of the housing 50 is 25°. The structural arrangement of the whole machine is reasonable and compact, the wind resistance in the air duct is small, and the noise in the air duct is low.

According to some embodiments of the present disclosure, the air treatment device 1000 further includes the first fan 71 and the second fan 72. The first fan 71 is disposed at the first air duct 1001, and the second fan 72 is disposed at the second air duct 1002. The gas in the air duct is driven by the fan to flow, to realize the functions of air supply and air discharge. The first fan 71 and the second fan 72 here may be the centrifugal fans.

The first fan 71 and the second fan 72 may also be located at one side of the rotary wheel assembly 100. By disposing the two fans occupying the large internal space of the whole machine at one side of the rotary wheel assembly 100, fewer structural parts at the other side of the rotary wheel assembly 100 are provided. Therefore, the size of the whole machine can be reduced, making the structure of the whole machine more compact, and facilitating the mounting of the whole machine to the required position.

In some examples, the wind wheel diameter of the first fan 71 is D1, and the wind wheel diameter of the second fan 72 is D2. D1 may be equal to D2. Therefore, the mounting of the two fans in the air duct is facilitated, without the need to distinguish the two fans during mounting, improving the assembly efficiency. Meanwhile, when the two fans are mounted at one side of the rotary wheel assembly 100, the size of the whole machine may be reduced, making the structure of the whole machine more compact.

In some examples, in order to increase the air supply volume of the first air duct 1001, the first fan 71 at the first air duct 1001 may be designed to be larger in size, i.e., D1 may be greater than D2. Therefore, the indoor fresh air volume, air humidity, or the like may be increased, improving the user's usage experience. In other embodiments of the present disclosure, D2 may be greater than D1, which is specifically determined according to the mounting environment and the use environment, and is not limited here.

As illustrated in FIG. 7, in some examples, the housing 50 has the first air inlet 501, the first air outlet 502, the second air inlet 503, and the second air outlet 504. The first air duct 1001 is formed between the first air inlet 501 and the first air outlet 502, and the second air duct 1002 is formed between the second air inlet 503 and the second air outlet 504. The first air inlet 501 and the second air outlet 504 are simultaneously located at the one side of the air treatment device 200 (a front side as illustrated in FIG. 7), and the first air outlet 502 and the second air inlet 503 are simultaneously located at the other side of the air treatment device 1000 (a rear side as illustrated in FIG. 7). The air may be introduced from the first air inlet 501 into the first air duct 1001. The air in the first air duct 101 may be introduced from the first air outlet 502 into the indoor. The indoor air may be introduced from the second air inlet 503 into the second air duct 1002. The air in the second air duct 1002 may be discharged outwards from the second air outlet 504. In this way, the air change function of the air treatment device 1000 is realized.

The first fan 71 is adjacent to the first air outlet 502, and the second fan 72 is adjacent to the second air inlet 503, i.e., the first fan 71 and the second fan 72 are respectively adjacent to one side of the housing 50, and the side is in direct communication with the indoor. Therefore, a circulation effect on the indoor air can be improved. Meanwhile, the structure is compact, the arrangement is reasonable, which reduces the size of the whole machine and facilitates the mounting and arrangement.

According to some embodiments of the present disclosure, the air treatment device 1000 may communicate the indoor with the outdoor. When the air treatment device 1000 operates, the air at the outdoor side enters the housing 50 from the first air inlet 501, passes through the rotary wheel assembly 100 after flowing through the purification assembly 90 and being heated by the heating member 80, and then is transmitted into the indoor from the first air outlet 502 by the first fan 71, to deliver the purified and humidified fresh air to the indoor. Meanwhile, the air at the indoor side enters the housing 50 from the second air inlet 503, may pass through the rotary wheel assembly 100 after flowing through the filtering mesh and the second fan 72, and then is discharged from the second air outlet 504, to form the circulation and continuously improve the indoor air. It can be understood that the rotary wheel assembly 100 is controlled to rotate by the drive motor 60 of the rotary wheel assembly 100 and may absorb and utilize the moisture in air discharged at the indoor side, to humidify the fresh air, and the rotary wheel motor is controlled by the circuit board.

The air treatment device 1000 includes the first operation mode and the second operation mode, and the first operation mode is the humidification mode. In winter, the indoor air is low in temperature and dry, the system operates the humidification mode, the rotary wheel assembly 100 operates at the low rotational speed, and the heating member 80 is turned on. The first air duct 1001 sucks the air from the outside, and the air reaches the high-temperature state when flowing through the rotary wheel assembly 100. In the high-temperature state, the air passes through the rotary wheel assembly 100 to take away the moisture on the rotary wheel assembly 100 and enters the indoor side to achieve the humidification and fresh air replacement effects. Meanwhile, the air of the indoor side enters the second air duct 1002 and is in the normal temperature state. When the air flows through the rotary wheel assembly 100, the moisture in the air is absorbed by the adsorption member 30, and then the dry air is discharged outdoors. The rotary wheel assembly 100 is driven by the drive motor 60 to rotate, allowing the region where the moisture is absorbed to rotate into the first air duct 1001 and to be brought back indoors during the air inlet from the outdoor side. Meanwhile, the region where the moisture on the adsorption member 30 is taken away rotates into the second air duct 1002 to continue to absorb the moisture, thereby continuously humidifying the indoor and replacing the fresh air.

The second operation mode is the heat recovery mode. In an exemplary embodiment of the present disclosure, in summer, when the indoor air is high in temperature and humid, the rotary wheel assembly 100 operates at the high rotational speed, and the heating member 80 is turned off. The first air duct 1001 sucks air from the outside. When the air passes through the rotary wheel assembly 100, the rotary wheel assembly 100 absorbs the moisture and heat in the air, and then transmits the moisture and heat into the indoor to achieve the cooling and dehumidification effects. Meanwhile, the second air duct 1002 sucks air from the indoor. When the air passes through the rotary wheel assembly 100, the high-temperature air takes away the moisture on the rotary wheel, thereby discharging the humid air.

FIG. 12 illustrates the schematic diagram of the relationship between the air volume and noise of the air treatment device 1000 simulated by the applicant. By adopting the above design, with the operation of the fan, the air volume increases, but the rising speed of the noise slows down. Even if the air volume is increased to 350 m³/h, the noise is still lower than 40 dB-A, i.e., the noise is also low on the basis of satisfying requirements for the daily air volume, which can ensure the use comfort. According to the streamline diagram of FIG. 13 and the velocity vector diagram of FIG. 14, it can be seen that by adopting the above structure, the airflow inside the air duct is uniform, with the low resistance and low noise. Therefore, the user's requirements for air volume and comfort can be satisfied, and the user's usage experience can be satisfied.

Other configurations and operations of the air treatment device 1000 according to embodiments of the present disclosure are known to those of ordinary skill in the art and will be omitted herein. An up-down direction, a left-right direction, and a front-rear direction make the up-down direction, the left-right direction, and the front-rear direction illustrated in the drawing as the criterion.

In the present disclosure, unless expressly stipulated and defined otherwise, the first feature being "on" or "under" the second feature may include the first feature being in direct contact with the second feature, or the first feature being not in direct contact with the second feature, but being in contact with the second feature through another feature therebetween. Moreover, the first feature being "above" the second feature includes the first feature being directly above or obliquely above the second feature, or simply mean that a level of the first feature is higher than a level of the second feature.

In the description of this specification, descriptions with reference to the terms "an embodiment", "some embodiments", "illustrative embodiments", "examples", "specific examples", or "some examples", etc. mean that specific features, structure, materials, or characteristics described in conjunction with the embodiment or example are included in at least one embodiment or example of the present disclosure. In this specification, the schematic representations of the above terms do not necessarily refer to the same implementation or example. Moreover, the described specific features, structures, materials or characteristics may be combined in any one or more embodiments or examples in a suitable manner.

Although the embodiments of the present disclosure have been shown and described above, it can be understood by those skilled in the art that various changes, modifications, replacements, and variations can be made to these embodiments without departing from the principles and ideas of the present disclosure. The scope of the present disclosure is defined by the claims as attached and their equivalents.

## Claims

1. An air treatment device, comprising:
a housing having a first air duct configured to supply air and a second air duct configured to discharge air; and
a rotary wheel assembly rotatably disposed in the housing, the rotary wheel assembly having an adsorption member capable of adsorbing and releasing moisture,
wherein the rotary wheel assembly is obliquely disposed in the housing.

2. The air treatment device according to claim 1, wherein a part of the rotary wheel assembly is located in the first air duct, and wherein another part of the rotary wheel assembly is located in the second air duct, the rotary wheel assembly having a diameter D, and the housing having a height H, where 0.3≤H/D≤0.8.

3. The air treatment device according to claim 2, wherein 0.4≤H/D≤0.65.

4. The air treatment device according to any one of claims 1 to 3, wherein an angle between the rotary wheel assembly and a bottom of the housing is b, where 5°≤b≤75°.

5. The air treatment device according to any one of claims 1 to 4, further comprising:
a first fan disposed in the first air duct; and
a second fan disposed in the second air duct,
wherein a size of a wind wheel of the first fan is greater than or equal to a size of a wind wheel of the second fan.

6. The air treatment device according to claim 5, wherein a size of the first fan is greater than or equal to a size of the second fan.

7. The air treatment device according to claim 5, wherein the housing comprises:
a first air inlet and a first air outlet that are in communication with the first air duct; and
a second air inlet and a second air outlet that are in communication with the second air duct, wherein:
the first air outlet and the second air inlet are located at one side of the housing;
the second air outlet and the first air inlet are located at another side of the housing;
the first fan is adjacent to the first air outlet; and
the second fan is adjacent to the second air outlet.

8. The air treatment device according to claim 5, wherein the first fan and the second fan are centrifugal fans.

9. The air treatment device according to any one of claims 1 to 8, further comprising:
a rotary wheel bracket disposed in the housing and having a mounting space, the rotary wheel assembly being rotatably disposed in the mounting space.

10. The air treatment device according to any one of claims 1 to 9, further comprising:
a driving assembly disposed at the rotary wheel assembly and configured to drive the rotary wheel assembly to rotate.

11. The air treatment device according to claim 10, wherein the driving assembly comprises a drive motor having a drive shaft, the drive shaft being located on a rotation axis of the rotary wheel assembly and configured to drive the rotary wheel assembly to rotate.

12. The air treatment device according to any one of claims 1 to 11, further comprising:
a drive motor disposed at the rotary wheel assembly and having a drive shaft, the drive shaft being located on a rotational axis of the rotary wheel assembly and configured to drive the rotary wheel assembly to rotate.

13. The air treatment device according to claim 12, further comprising:
a rotary wheel bracket disposed in the housing and having a mounting space, the rotary wheel assembly being rotatably disposed in the mounting space.

14. The air treatment device according to claim 13, wherein the rotary wheel bracket comprises a support plate and a first partition, the rotary wheel assembly being disposed at the support plate, and the first partition being disposed at a side of the support plate away from the rotary wheel assembly and located between the first air duct and the second air duct.

15. The air treatment device according to claim 14, wherein the housing is provided with a mounting plate extending obliquely relative to an outer surface of the housing, the support plate being engaged with the mounting plate to obliquely mount the rotary wheel assembly in the housing.

16. The air treatment device according to claim 12, wherein the rotary wheel assembly is disposed in a direction inclined to a bottom plate of the housing, an angle between the rotary wheel assembly and the bottom plate of the housing being b, where 5°≤b≤75°.

17. The air treatment device according to claim 16, wherein 20°≤b≤40°.

18. The air treatment device according to claim 12, further comprising:
a first fan disposed in the first air duct; and
a second fan disposed in the second air duct,
wherein the first fan and the second fan are located at one side of the rotary wheel assembly.

19. The air treatment device according to claim 18, wherein a wind wheel of the first fan and a wind wheel of the second fan have a same size.

20. The air treatment device according to claim 18, wherein the housing comprises:
a first air inlet and a first air outlet that are in communication with the first air duct; and
a second air inlet and a second air outlet that are in communication with the second air duct, wherein:
the first air outlet and the second air inlet are located at one side of the housing;
the first fan is adjacent to the first air outlet; and
the second fan is adjacent to the second air inlet.

21. The air treatment device according to any one of claims 1 to 20, further comprising:
a heating member disposed in the first air duct and located upstream of the rotary wheel assembly, the heating member being adapted to introduce a heated gas into the rotary wheel assembly; and
a purification assembly disposed in the first air duct and located upstream of the heating member.
